# FASCICULE DE BREVET EUROPEEN

(11) **EP 3 146 398 B1**
(45) Date de publication et mention de la délivrance du brevet: **10.11.2021**
(21) Numéro de dépôt: 15726082.9
(22) Date de dépôt: 22.05.2015
(51) Int. Cl.: G05B 19/416

(54) **PROCÉDÉ DE CONFIGURATION D'UN ACTIONNEUR DE MANOEUVRE D'UN ÉLÉMENT MOBILE D'UN ÉQUIPEMENT DOMOTIQUE ET ACTIONNEUR FONCTIONNANT SELON CE PROCÉDÉ**
VERFAHREN ZUR KONFIGURIERUNG EINES AKTUATORS ZUM FÜHREN EINES MOBILEN ELEMENTS EINES AUTOMATISIERTEN AUSRÜSTUNGSTEILS UND AKTUATORBETRIEB GEMÄSS DES BESAGTEN VERFAHRENS
METHOD FOR CONFIGURING AN ACTUATOR FOR GUIDING A MOBILE ELEMENT OF AN AUTOMATED PIECE OF EQUIPMENT AND ACTUATOR OPERATING ACCORDING TO SAID METHOD

(30) Priorité: 23.05.2014 FR 1454663
(43) Date de publication de la demande: 29.03.2017
(73) Titulaire: SOMFY ACTIVITES SA, 74300 Cluses (FR)
(72) Inventeur: BARRALON, Eric, F-74800 Eteaux (FR); BOCQUET, Jean-François, F-74700 Sallanches (FR)
(74) Mandataire: Novaimo
(86) Numéro de dépôt international: PCT/EP2015/061480
(87) Numéro de publication internationale: WO 2015/177374

(56) Documents cités:
- US-A- 5 729 101
- None

## Description

L'invention concerne le domaine des actionneurs électromécaniques permettant la manœuvre motorisée d'un élément mobile de fermeture, d'occultation, de protection solaire ou d'écran équipant un bâtiment, tels qu'un volet roulant, un store, une porte. En particulier, elle concerne un procédé de fonctionnement ou un procédé de configuration d'un tel actionneur électromécanique. Elle concerne aussi un dispositif domotique ou une installation comprenant un tel actionneur.

On connaît des fonctions d'arrêt et de démarrage doux mises en oeuvre sur différents dispositifs motorisés d'entraînement d'un élément mobile de fermeture, d'occultation, de protection solaire ou d'écran équipant un bâtiment. De telles fonctions permettent d'éviter des bruits et de limiter les sollicitations mécaniques dans les chaînes de transmission du mouvement aux éléments mobiles. Dans de telles fonctions, une étendue ou une amplitude d'une plage de course de l'élément mobile est définie par une durée ou une amplitude de déplacement de l'élément mobile ou du motoréducteur de l'actionneur entraînant l'élément mobile. Une première borne de cette plage est définie par la position d'arrêt de l'élément mobile dans le cas d'une fonction de démarrage doux et par la position de début de ralentissement dans le cas d'une fonction d'arrêt doux. L'autre borne est définie par une donnée d'amplitude ou d'étendue de la plage depuis la première borne.

Ainsi, dans une fonction de démarrage doux, on définit une plage de la course de l'élément mobile sur laquelle l'élément mobile ou le motoréducteur entraînant l'élément mobile est progressivement accéléré puis entraîné à une première vitesse. Par exemple, l'accélération entre une vitesse nulle et la première vitesse est réalisée selon une rampe dont le profil peut être linéaire ou peut présenter une ou plusieurs courbures et/ou une inflexion, jusqu'à atteindre la première vitesse définie. La rampe d'accélération peut s'étendre sur toute la plage de démarrage doux ou sur une partie seulement de cette plage. Une nouvelle accélération est alors mise en œuvre pour atteindre une deuxième vitesse ou vitesse nominale, qui sera conservée préférentiellement jusqu'à l'entrée dans une nouvelle zone d'arrêt doux.

De manière similaire, dans une fonction d'arrêt doux, on définit une plage de la course de l'élément mobile sur laquelle l'élément mobile ou le motoréducteur entraînant l'élément mobile est ralenti jusqu'à atteindre une troisième vitesse, inférieure à la deuxième puis arrêté. Par exemple, le ralentissement est réalisé selon une rampe dont le profil peut être linéaire ou peut présenter une ou plusieurs courbures et/ou une inflexion. La rampe de décélération peut s'étendre sur toute la plage d'arrêt doux ou sur une partie seulement de cette plage.

On connaît également une fonction d'accostage mise en œuvre sur différents dispositifs motorisés d'entraînement d'un élément mobile de fermeture, d'occultation, de protection solaire ou d'écran équipant un bâtiment. Une telle fonction permet également d'éviter des bruits et de limiter les sollicitations mécaniques dans les chaînes de transmission du mouvement aux éléments mobiles. Dans une telle fonction, une étendue ou une amplitude d'une plage de course de l'élément mobile est définie par une durée ou une amplitude de déplacement de l'élément mobile ou du motoréducteur de l'actionneur entraînant l'élément mobile. Une première borne de cette plage est définie par la position d'arrêt de l'élément mobile, c'est-à-dire la position de fin de course haute ou la position de fin de course basse de l'élément mobile. L'autre borne est définie par une donnée d'amplitude ou d'étendue de la plage depuis la première borne. La plage ainsi définie est aussi appelée zone d'accostage. Dans une telle zone d'accostage, on peut, outre ralentir ou accélérer l'élément mobile progressivement, mettre en œuvre une logique particulière de détection d'obstacle ou de fin de course, c'est-à dire mettre en œuvre une logique de détection d'obstacle ou de fin de course différente de celle mise en œuvre hors de la zone d'accostage. Le document EP 2 015 156 A1 décrit un dispositif de manœuvre d'un élément mobile d'un équipement domotique comprenant une zone d'accostage définie par une durée de déplacement. Les documents EP 1 510 649 A1 et EP 1 508 844 A1 décrivent des dispositifs de manoeuvre d'un élément mobile d'un équipement domotique avec des déplacements entre différents points définies par des durées.

Il est connu de fixer arbitrairement des données permettant de définir de telles plages lors de la fabrication d'un actionneur ou lors de l'installation d'un actionneur sur un élément qu'il est destiné à entraîner.

Ainsi, dans bon nombre de situations, les plages prédéfinies ne sont pas adaptées à l'installation domotique. En particulier dans le domaine des volets roulants, dont les longueurs sont très variables, des plages prédéfinies ne correspondent pas aux souhaits des utilisateurs.

Le but de l'invention est de fournir un procédé de configuration améliorant les procédés connus de l'art antérieur. En particulier, l'invention propose un procédé de configuration simple et permettant un réglage optimal d'un actionneur d'élément mobile enroulable tel qu'un volet.

L'invention est exposée dans le jeu de revendications 1 à 13 joint.

L'invention sera mieux comprise à la lecture de la description qui va suivre, donnée uniquement à titre d'exemple et faite en se référant aux dessins annexés sur lesquels :
La figure 1 représente sous forme de schéma fonctionnel une installation domotique munie d'un actionneur selon l'invention.
Les figures 2 et 3 représentent, sous forme d'ordinogrammes, un mode d'exécution du procédé de configuration selon l'invention.
La figure 4 est diagramme schématique d'un exemple de variations de vitesse d'un motoréducteur ou d'un élément mobile entraîné par ce motoréducteur en fonction du temps au cours d'une course de montée d'un élément mobile entre une fin de course basse et une fin de course haute.
La figure 5 est diagramme schématique d'un exemple de variations de vitesse d'un motoréducteur ou d'un élément mobile entraîné par ce motoréducteur en fonction du temps au cours d'une course de descente d'un élément mobile mobile entre une fin de course haute et une fin de course basse.

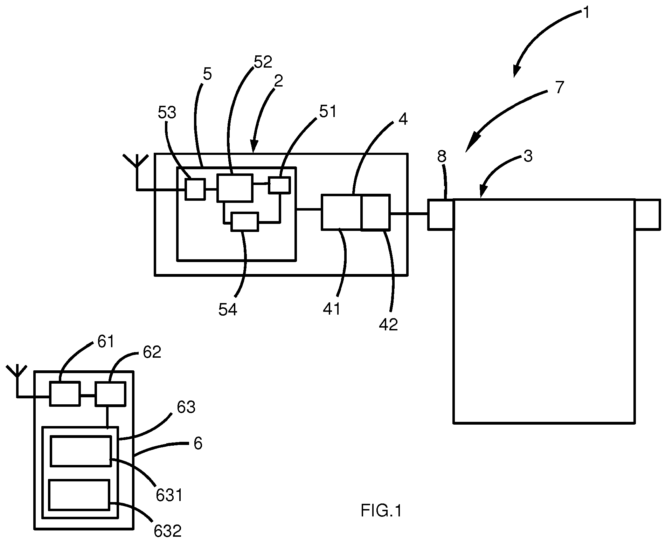

Un mode de réalisation d'une installation domotique 1 selon l'invention est décrit ci-après en référence à la figure 1. L'installation domotique comprend un dispositif domotique 7, une télécommande 9, par exemple une télécommande nomade émettant des ordres sous forme de signaux électromagnétiques, notamment infrarouges ou radio et un outil de configuration 6 Les instructions émises par l'outil permettent de configurer le dispositif domotique. Les instructions sont émises en conséquence d'une action d'un utilisateur ou d'un installateur ou d'un intégrateur sur une interface homme-machine de l'outil.

Le dispositif domotique est un dispositif domotique motorisé de fermeture, d'occultation, de protection solaire ou d'écran, comme notamment un dispositif motorisé de volet roulant, de store ou de porte enroulable. Le dispositif domotique comprend un actionneur 2 et un élément mobile 3, l'actionneur étant capable de mettre en mouvement ou de manœuvrer l'élément mobile, notamment via un élément d'entraînement 8. Le dispositif domotique équipe par exemple une ouverture d'un bâtiment pour assurer sa fermeture, l'occultation au niveau de celle-ci ou la protection solaire au niveau de celle-ci. L'élément mobile est un élément mobile de fermeture, de protection solaire, d'occultation ou d'écran, comme notamment un volet roulant, un store, un portail ou une porte enroulable. L'élément d'entraînement 8 est par exemple un tube d'enroulement sur lequel l'élément mobile s'enroule lors de sa montée et duquel l'élément mobile se déroule lors de sa descente. L'actionneur est donc lié mécaniquement, notamment lié en rotation, à l'élément d'entraînement et l'élément d'entraînement est lié mécaniquement à l'élément mobile.

L'actionneur 2 comprend principalement un motoréducteur 4 et une unité de pilotage du motoréducteur. Le motoréducteur comprend un moteur électrique 41 couplé à un réducteur 42. Le moteur est de préférence un moteur à courant continu à commutations électroniques, sans balais. L'unité de pilotage permet de piloter ou gérer l'alimentation électrique du moteur, en particulier l'alimentation successive d'enroulements du moteur. L'unité de pilotage comprend une mémoire 51, une unité 52 logique de traitement comme un calculateur, un récepteur 53 d'instructions, notamment un récepteur de signaux électromagnétiques et un élément 54 de modification d'au moins une donnée stockée en mémoire. L'élément de modification est représenté distinct de l'unité logique de traitement. Il peut alternativement en faire partie.

L'unité de pilotage permet de gérer ou commander l'alimentation électrique du moteur en fonction de différentes informations qu'elle recueille via le récepteur 53 ou via d'autres éléments non représentés comme des capteurs. Ainsi, l'unité de pilotage permet de piloter l'actionneur en fonction de différents paramètres tels que notamment un ordre reçu d'un point de commande, notamment de la télécommande, via le récepteur de l'actionneur et tels que la position de l'actionneur ou l'évolution de celle-ci. L'unité logique de traitement permet de gérer le fonctionnement en commun des différents éléments de l'unité de pilotage. L'unité logique de traitement permet de mettre en œuvre la logique de commande du motoréducteur.

L'actionneur, en particulier l'unité logique de pilotage, comprend tous les éléments matériels et/ou logiciels permettant de mettre en œuvre le procédé de fonctionnement ou de configuration objet de l'invention. En particulier, certains éléments peuvent consister en des modules de programmes d'ordinateurs. Les moyens matériels et/ou logiciels comprennent l'élément de modification d'au moins une donnée stockée en mémoire, en particulier une donnée définissant l'étendue d'une plage de course de l'élément mobile.

L'outil de configuration 6 comprend un émetteur 61 d'instructions, une unité 62 logique de traitement et une interface 63 homme-machine. L'interface homme-machine comprend un élément 631 de signification d'informations à l'utilisateur, comme un écran, et un élément 632 de saisie ou d'entrée d'informations, comme un clavier. Les éléments de signification et de saisie peuvent être réunis dans un écran tactile. L'outil de configuration peut être une télécommande ou une tablette ou un téléphone.

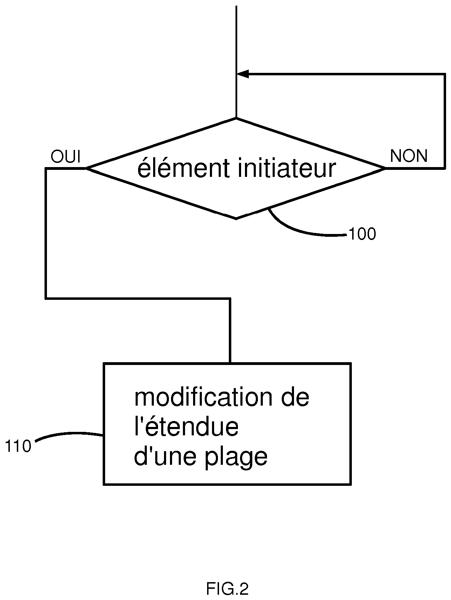

Le principe du procédé de fonctionnement ou de configuration d'un actionneur selon l'invention est décrit ci-après en référence à la figure 2.

Dans une première phase 100, on détermine si un élément initiateur survient. En cas d'absence de survenue, on boucle sur la phase 100. En cas de survenue, on passe à une phase 110 dans laquelle on modifie l'étendue ou l'amplitude d'au moins une plage de la course de l'élément mobile.

L'élément initiateur peut être une requête ou une demande formulée par l'utilisateur ou l'installateur ou l'intégrateur. Par exemple, cette requête peut prendre la forme d'une action sur l'outil de configuration, cette action étant liée à une requête de modification d'un paramètre d'arrêt doux ou de démarrage doux.

Alternativement, l'élément initiateur peut être une détermination d'une caractéristique de l'élément 3 mobile, par exemple sa course ou un couple nécessaire à son entraînement.

Sur détection de l'élément initiateur, on passe de préférence directement à la phase 110.

On suppose initialement que des données sont enregistrées dans la mémoire 51 de sorte à définir les étendues ou amplitudes des différentes plages utilisées dans le fonctionnement de l'actionneur.

On suppose par exemple que sont stockées en mémoire une première donnée Dm1, une deuxième donnée Dm2, une troisième donnée Dd1 et une quatrième donnée Dd2. Une cinquième donnée D5 et une sixième donnée D6 peuvent également être définies.

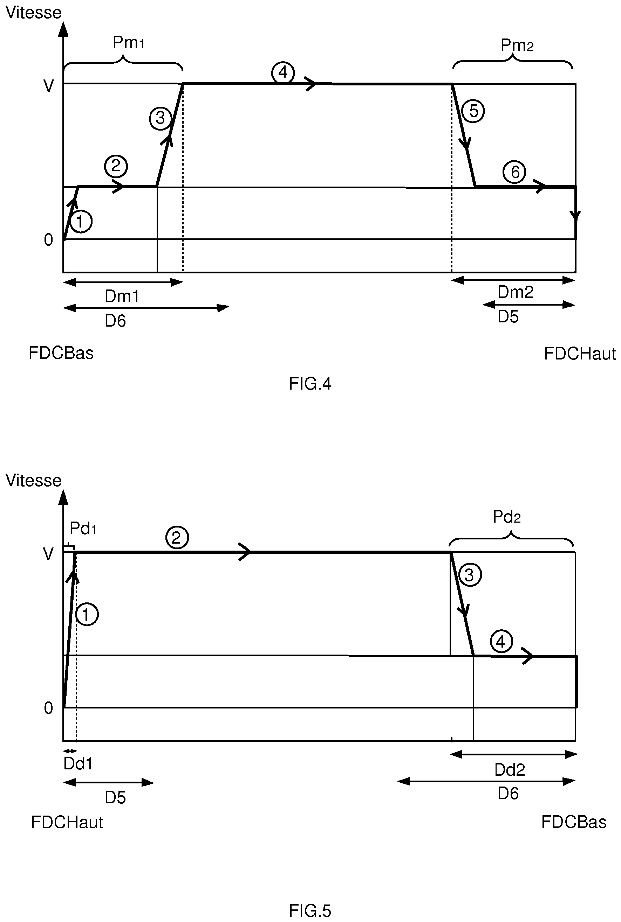

Comme représenté sur la figure 4, la première donnée Dm1 définit une première plage Pm1 de la course de l'élément mobile sur laquelle l'élément mobile ou le motoréducteur entraînant l'élément mobile à la montée est accéléré (phase ①) puis maintenu à une première vitesse (phase ②), avant d'être à nouveau accéléré pour atteindre la deuxième vitesse de consigne (phase ③). L'élément mobile ou le motoréducteur entraînant l'élément mobile est ensuite maintenu à la deuxième vitesse (phase ④). Par exemple, l'accélération entre une vitesse nulle et la première vitesse est réalisée selon une rampe dont le profil peut être linéaire ou peut présenter une ou plusieurs courbures et/ou une inflexion. Les rampes d'accélération s'étendent préférentiellement sur une partie minimale de la plage de démarrage doux. L'accélération maximale peut être souhaitée, en relation avec les capacités du moteur et la valeur de la vitesse à atteindre.

Comme représenté sur la figure 4, la deuxième donnée Dm2 définit une deuxième plage Pm2 de la course de l'élément mobile sur laquelle l'élément mobile ou le motoréducteur entraînant l'élément mobile à la montée est ralenti jusqu'à atteindre une troisième vitesse, inférieure à la deuxième (phase ⑤) puis maintenu à la troisième vitesse (phase ⑥), avant d'être arrêté. Par exemple, le ralentissement est réalisé selon une rampe dont le profil peut être linéaire ou peut présenter une ou plusieurs courbures et/ou une inflexion. La rampe de décélération s'étend sur une partie seulement de cette deuxième plage, notamment sur moins d'un quart de la plage.

Comme représenté sur la figure 5, la troisième donnée Dd1 définit une troisième plage Pd1 de la course de l'élément mobile sur laquelle l'élément mobile ou le motoréducteur entraînant l'élément mobile à la descente est accéléré (phase ①), de sorte à atteindre rapidement la quatrième vitesse, correspondant à la vitesse nominale en descente (phase ②). Alternativement à ce qui est représenté sur la figure 5, le profil de vitesse dans la troisième plage peut être similaire à celui de la première plage. Ainsi, par exemple, l'accélération entre une vitesse nulle et la quatrième vitesse est réalisée selon une rampe dont le profil peut être linéaire ou peut présenter une ou plusieurs courbures et/ou une inflexion. Les rampes d'accélération s'étendent préférentiellement sur une partie minimale de la plage de démarrage doux. L'accélération maximale peut être souhaitée, en relation avec les capacités du moteur et la valeur de la vitesse à atteindre.

Comme représenté sur la figure 5, la quatrième donnée Dd2 définit une quatrième plage Pd2 de la course de l'élément mobile sur laquelle l'élément mobile ou le motoréducteur entraînant l'élément mobile à la descente est ralenti (phase ③) jusqu'à atteindre une cinquième vitesse, inférieure à la quatrième puis maintenu à la cinquième vitesse (phase ④), avant d'être arrêté. Par exemple, le ralentissement est réalisé selon une rampe dont le profil peut être linéaire ou peut présenter une ou plusieurs courbures et/ou une inflexion. La rampe de décélération s'étend sur une partie seulement de cette quatrième plage, notamment sur moins d'un quart de la plage.

La cinquième D5 donnée définit une plage P5 de la course de l'élément mobile sur laquelle on met en œuvre une logique ou stratégie particulière de détection d'obstacle et/ou de butée à l'approche d'une première fin de course de l'élément mobile, notamment une fin de course haute. Cette cinquième donnée peut définir une étendue depuis la position de première fin de course. Sur cette cinquième plage de la course de l'élément mobile, la logique ou stratégie de détection d'obstacle et/ou de butée est modifiée par rapport à ce qui est mis en œuvre hors de cette plage.

La sixième donnée D6 définit une plage P6 de la course de l'élément mobile sur laquelle on met en œuvre une logique ou stratégie particulière de détection d'obstacle et/ou de butée à l'approche d'une deuxième fin de course de l'élément mobile, notamment une fin de course basse. Cette sixième donnée peut définir une étendue depuis la position de deuxième fin de course. Sur cette sixième plage de la course de l'élément mobile, la logique ou stratégie de détection d'obstacle et/ou de butée est modifiée par rapport à ce qui est mis en œuvre hors de cette plage.

Les étendues des plages sont définies par exemple par des données temporelles, comme des durées, ou par des données spatiales, comme des données de comptage du déplacement angulaire d'un arbre du motoréducteur.

Par exemple, initialement c'est-à-dire en fin de fabrication de l'actionneur ou avant la mise en œuvre du procédé de configuration selon l'invention, les données peuvent valoir :
Dm1 = 1 seconde ;
Dm2 = 2,5 secondes ;
Dd1 = 0,5 seconde ;
Dd2 = 3,5 secondes
D5 = 1,5 secondes ;
D6 = 3,5 secondes.

Autrement dit encore, les données initiales ne sont pas des données obtenues suite à une première procédure de configuration.

Une ou plusieurs des valeurs des données initiales peuvent être dépendantes de paramètres relatifs à l'élément mobile, par exemple le type de l'élément mobile ou la taille de l'élément mobile. Une ou plusieurs des valeurs des données initiales peuvent être définies par une première opération de configuration ne mettant pas en œuvre le procédé selon l'invention. Par exemple, une ou plusieurs des valeurs des données initiales peuvent être définies par une information de position correspondant à un état de lames ajourées ou déduites d'une telle information. Une initialisation automatique des valeurs de données initiales permet de mieux répondre aux problématiques évoquées, à savoir configurer simplement et de manière adaptée une installation de volet roulant motorisé, en relation avec des données initiales fournies par le fabricant. En particulier, les données initiales sont déduites de la longueur du volet roulant. Ainsi, la longueur de la plage D2 concernant l'accostage en fin de course basse représente-t-elle 15% de la course totale du volet.

Les valeurs des données peuvent aussi toutes être différentes ou toutes être identiques. Dans ce dernier cas, une seule donnée peut être utilisée pour définir les amplitudes de plusieurs plages, voire de toutes les plages. Les valeurs peuvent être toutes paramétrables. Alternativement, certaines valeurs seront définies et non paramétrables.

Dans certains cas, la deuxième vitesse peut avoir une valeur différente d'une vitesse nominale rapide comprise entre 12 et 17 tr/min. Elle peut par exemple prendre une valeur de vitesse nominale lente comprise entre 6 et 10 tr/min. Les plages de la course correspondant aux plages de fonctionnement en démarrage ou arrêt doux, seront donc automatiquement adaptées, notamment du fait que les rampes d'accélérations ou de décélération seront différentes dans les deux cas.

Dans la phase 110, tout ou partie des données peut être modifié. La modification peut comprendre l'exécution d'une opération mathématique sur l'au moins une donnée, notamment une modification par application d'un facteur multiplicatif sur l'au moins une donnée, en particulier un facteur compris dans l'intervalle [0 ; 2.5], voire compris dans l'intervalle [0.5 ; 1.5], ou une modification par ajout d'une quantité à l'au moins une donnée. Dans le cas de modification par application d'un facteur multiplicatif, le facteur peut être exprimé par un pourcentage, par exemple 50% pour 0,5, 100% pour 1 et 150% pour 1,5.

Dans le cas d'une modification par ajout d'une quantité, la quantité peut évidemment être positive ou négative.

La modification peut être appliquée de manière différentiée aux différentes données. Par exemple, à partir d'une seule valeur modificative, comme une valeur de pourcentage, on peut appliquer des valeurs modificatives différentes aux différentes données. Ceci peut par exemple permettre de tenir compte de la différence de vitesse de déplacement de l'élément mobile induite par le changement de diamètre d'enroulement.

Alternativement, la modification peut être appliquée de manière identique aux différentes données.

Alternativement encore, une modification propre à chacune des différentes données peut être appliquée.

La modification d'une ou plusieurs valeurs et donc la modification d'une ou plusieurs étendues de plages peut être limitée. Par exemple, un facteur multiplicatif peut être impérativement compris dans un intervalle, tel que 50-200%. De cette manière, on peut par exemple garantir l'existence d'une plage d'étendue non nulle afin d'éviter des endommagements, notamment par un accostage en butée à trop grande vitesse. De cette manière, on peut éviter aussi des plages trop étendues qui pourraient laisser penser à l'utilisateur l'existence d'un problème ou d'un dysfonctionnement de l'actionneur. Ceci permet une grande souplesse de configuration, tout en restant dans les limites d'un cadre adapté à chaque situation et installation.

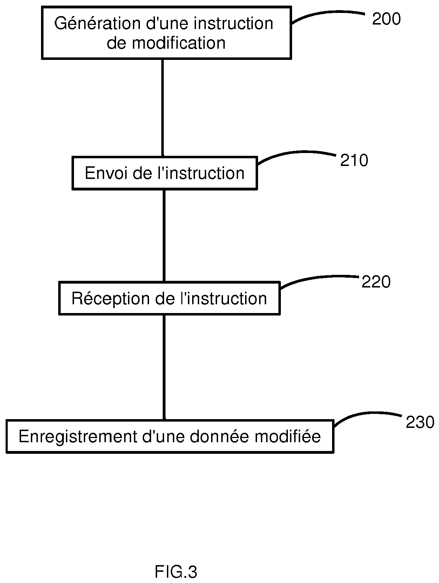

Un premier mode d'exécution d'un procédé de fonctionnement ou de configuration d'un actionneur selon l'invention est décrit ci-après en référence à la figure 3.

Les étapes 200 à 230 sont par exemple incluses dans la phase 110.

Dans une première étape 200, on génère une instruction ou une requête de modification. Cette instruction est par exemple réalisée suite à une action d'un utilisateur sur l'outil de configuration. L'instruction est par exemple générée par dialogue entre l'outil de configuration et l'utilisateur via l'interface homme-machine. Dans ce dialogue, l'utilisateur peut répondre par saisie ou entrée de données à des demandes formulées par l'outil. Par exemple, l'outil peut demander à l'utilisateur d'indiquer ou de sélectionner les plages qu'il désire modifier et demander à l'utilisateur d'indiquer la mesure dans laquelle il souhaite modifier les plages. De son côté, l'utilisateur indique ou sélectionne les plages qu'il désire modifier. L'utilisateur indique aussi la mesure relative dans laquelle il souhaite modifier les plages. L'instruction générée contient des informations de modification d'une ou plusieurs valeurs définissant les plages. En particulier, l'utilisateur peut modifier les valeurs par pas prédéfinis, par exemple 1% ou 10%. Alternativement, l'utilisateur n'a pas accès sur l'interface homme-machine à des valeurs quantitatives, mais à des niveaux, notamment des niveaux associés à des fonctions. Ces niveaux sur l'interface homme-machine correspondent toutefois à des valeurs relatives par rapport à la donnée initiale.

Dans une deuxième étape 210, l'instruction générée est transmise à l'actionneur.

Dans une troisième étape 220, l'instruction transmise est reçue et interprétée par l'actionneur.

Dans une quatrième étape 230, les étendues d'une ou plusieurs valeurs définissant les plages sont modifiées. Ceci est réalisé par l'intermédiaire d'un élément 54 de modification d'au moins une donnée stockée en mémoire 51. En effet, cet élément permet d'effacer une ou plusieurs valeurs stockées en mémoire et définissant une ou plusieurs plages et d'enregistrer à la place une ou plusieurs valeurs modifiées obtenues comme expliqué précédemment.

D'autres étapes peuvent être mises en œuvre, notamment pour le retour aux valeurs par défaut. Dans ce cas, on génère une instruction ou une requête de remise à zéro. Cette instruction est par exemple réalisée suite à une action d'un utilisateur sur l'outil de configuration, notamment via l'interface homme-machine.

Dans ce qui a été décrit ci-dessus, la modification de l'étendue d'une plage est réalisée de manière relative à une donnée initiale. En fonctionnement, la plage ainsi définie est fixe.

Dans un autre mode de réalisation, la donnée initiale peut être une donnée variable, dépendant par exemple de la course restant à parcourir entre le point de départ et la fin de course vers laquelle est entraîné le volet. Ainsi, une modification relative à la donnée initiale est prise en compte de manière simple dans le cas d'une plage variable, permettant ainsi au volet de rester dans des limites de sécurité et d'avoir un comportement tout à fait adapté aux souhaits des utilisateurs.

Ainsi par exemple, si la plage variable est définie par une valeur de 15% de la course à parcourir, et que le facteur multiplicatif de la modification est choisi égal à 1,5, le choix de la position d'entrée ou de sortie de la zone ainsi défini sera basé sur une valeur relative de 15% x 1,5 x Distance restant à parcourir.

Grâce au procédé selon l'invention et à un actionneur selon l'invention, on peut adapter de manière fine le fonctionnement de l'actionneur à l'application qu'on en fait. En effet, on peut, au choix, adapter de manière simple différentes plages pour avoir des comportements plus ou moins dynamiques des éléments mobiles entraînés.

## Revendications

1. Procédé de configuration d'un actionneur (2) de manœuvre d'un élément (3) mobile de fermeture, de protection solaire, d'occultation ou d'écran, l'actionneur comprenant un motoréducteur (4) et une unité (5) de pilotage du motoréducteur, l'unité de pilotage incluant une mémoire (51) dans laquelle différentes plages de la course de l'élément ont été préenregistrées, des données initiales enregistrées dans la mémoire définissant les étendues des différentes plages utilisées dans le fonctionnement de l'actionneur, le procédé comprenant une étape de modification relative de l'étendue d'au moins une plage constituant une partie de la course, par rapport aux données initiales définissant cette plage.

2. Procédé de configuration selon la revendication 1, **caractérisé en ce que** les différentes plages incluent :
- une première plage dans laquelle l'élément mobile est mis en mouvement dans un premier sens, notamment mis en mouvement progressivement, à partir d'une vitesse nulle ; et/ou
- une deuxième plage dans laquelle l'élément mobile en mouvement selon le premier sens est ralenti jusqu'à une vitesse nulle ; et/ou
- une troisième plage dans laquelle une logique de détection de fin de course et/ou d'obstacle alors que l'élément mobile est en mouvement selon le premier sens est modifiée et mise en œuvre ; et/ou
- une quatrième plage dans laquelle l'élément mobile est mis en mouvement dans un deuxième sens, notamment mis en mouvement progressivement, à partir d'une vitesse nulle ; et/ou
- une cinquième plage dans laquelle l'élément mobile en mouvement selon le deuxième sens est ralenti jusqu'à une vitesse nulle ; et/ou
- une sixième plage dans laquelle une logique de détection de fin de course et/ou d'obstacle alors que l'élément mobile est en mouvement selon le deuxième sens est modifiée et mise en œuvre.

3. Procédé de configuration selon l'une des revendications précédentes, **caractérisé en ce que** l'étape de modification fait suite à une étape d'instruction de modification par un utilisateur ou un installateur ou un intégrateur.

4. Procédé de configuration selon la revendication précédente, **caractérisé en ce que** l'étape d'instruction de modification est mise en œuvre par action sur un outil (6) de programmation, notamment un outil de programmation nomade, comme une télécommande ou une tablette ou un téléphone.

5. Procédé de configuration selon l'une des revendications précédentes, **caractérisé en ce que** l'étape de modification fait suite, notamment fait suite automatiquement, à une étape dans laquelle une caractéristique de l'élément (3) mobile, par exemple sa course ou un couple nécessaire à son entraînement, est déterminée.

6. Procédé de configuration selon l'une des revendications précédentes, **caractérisé en ce que** l'étape de modification fait suite à une détermination automatique de la plage préenregistrée.

7. Procédé de configuration selon l'une des revendications précédentes, **caractérisé en ce que** l'étendue des différentes plages est définie par au moins une donnée, notamment au moins une donnée temporelle, comme une durée, ou au moins une donnée spatiale, comme une donnée de comptage du déplacement angulaire d'un arbre du motoréducteur.

8. Procédé de configuration selon la revendication précédente, **caractérisé en ce que** l'étape de modification comprend l'exécution d'une opération mathématique sur l'au moins une donnée, en particulier sur au moins une donnée initiale, notamment une modification par application d'un facteur multiplicatif sur l'au moins une donnée, en particulier un facteur compris dans l'intervalle [0; 2.5], voire compris dans l'intervalle [0.5; 1.5], ou une modification par ajout d'une quantité à l'au moins une donnée, en particulier par ajout d'une quantité relative à l'au moins une donnée initiale.

9. Procédé de configuration selon la revendication précédente, **caractérisé en ce que** l'étendue de la première plage est définie par une première donnée et/ou l'étendue de la deuxième plage est définie par une deuxième donnée et/ou l'étendue de la troisième plage est définie par une troisième donnée et/ou l'étendue de la quatrième plage est définie par une quatrième donnée et/ou l'étendue de la cinquième plage est définie par une cinquième donnée et/ou l'étendue de la sixième plage est définie par une sixième donnée, la modification étant appliquée de manière identique aux première, deuxième, troisième, quatrième, cinquième et sixième données ou la modification étant appliquée de manière différentiée aux première, deuxième, troisième, quatrième, cinquième et sixième données.

10. Support d'enregistrement de données lisible par un calculateur, sur lequel est enregistré un programme informatique comprenant des moyens de codes de programme informatique de mise en œuvre du procédé selon l'une des revendications précédentes, notamment de mise en œuvre des étapes d'un procédé selon l'une des revendications précédentes.

11. Actionneur électromécanique (2) de manœuvre d'un élément mobile de fermeture enroulable, **caractérisé en ce qu'**il comprend des éléments matériels et/ou logiciels (5, 51, 52, 53, 54) de mise en œuvre du procédé de configuration selon l'une des revendications 1 à 9 précédentes, en particulier **caractérisé en ce qu'**il comprend un moteur à courant continu et à commutations électroniques.

12. Dispositif domotique (7) comprenant un actionneur (2) selon la revendication précédente et un élément mobile (3).

13. Installation domotique (1) comprenant un actionneur (2) selon la revendication 11, un élément mobile (3) et un outil de configuration (6).

## Patentansprüche

1. Verfahren zur Konfiguration eines Aktors (2) zur Betätigung eines beweglichen Schließ-, Sonnenschutz-, Abdeckungs- oder Schirmelements (3), wobei der Aktor einen Getriebemotor (4) und eine Steuerungseinheit (5) des Getriebemotors umfasst, wobei die Steuerungseinheit einen Speicher (51) enthält, in dem verschiedene Bereiche des Wegs des Elements vorab gespeichert wurden, wobei Initialdaten, die im Speicher gespeichert sind, die Erstreckungen der verschiedenen Bereiche definieren, die im Betrieb des Aktors genutzt werden, wobei das Verfahren einen Schritt des relativen Änderns der Erstreckung mindestens eines Bereichs, der einen Abschnitt des Wegs bildet, im Verhältnis zu den Initialdaten, die diesen Bereich definieren, umfasst.

2. Konfigurationsverfahren nach Anspruch 1, **dadurch gekennzeichnet, dass** die verschiedenen Bereiche Folgendes enthalten:
- einen ersten Bereich, in dem das bewegliche Element ausgehend von einer Geschwindigkeit von null in einer ersten Richtung bewegt wird, insbesondere allmählich bewegt wird; und/oder
- einen zweiten Bereich, in dem das bewegliche Element, das sich in der ersten Richtung bewegt, bis auf eine Geschwindigkeit von null verlangsamt wird; und/oder
- einen dritten Bereich, in dem eine Wegende- und/oder Hindernis-Erkennungslogik, während sich das bewegliche Element in der ersten Richtung bewegt, geändert und eingesetzt wird; und/oder
- einen vierten Bereich, in dem das bewegliche Element ausgehend von einer Geschwindigkeit von null in einer zweiten Richtung bewegt wird, insbesondere allmählich bewegt wird; und/oder
- einen fünften Bereich, in dem das bewegliche Element, das sich in der zweiten Richtung bewegt, bis auf eine Geschwindigkeit von null verlangsamt wird; und/oder
- einen sechsten Bereich, in dem eine Wegende- und/oder Hindernis-Erkennungslogik, während sich das bewegliche Element in der zweiten Richtung bewegt, geändert und eingesetzt wird.

3. Konfigurationsverfahren nach einem der vorhergehenden Ansprüche, **dadurch gekennzeichnet, dass** der Schritt des Änderns auf einen Schritt des Anweisens einer Änderung durch einen Benutzer oder einen Installateur oder einen Integrator folgt.

4. Konfigurationsverfahren nach dem vorhergehenden Anspruch, **dadurch gekennzeichnet, dass** der Schritt des Anweisens einer Änderung durch Einwirkung auf ein Programmierwerkzeug (6) durchgeführt wird, insbesondere ein mobiles Programmierwerkzeug wie eine Fernsteuerung oder ein Tablet oder Telefon.

5. Konfigurationsverfahren nach einem der vorhergehenden Ansprüche, **dadurch gekennzeichnet, dass** der Schritt des Änderns insbesondere automatisch auf einen Schritt folgt, bei dem eine Eigenschaft des beweglichen Elements (3), zum Beispiel dessen Weg oder ein Drehmoment, das für dessen Antrieb erforderlich ist, bestimmt wird.

6. Konfigurationsverfahren nach einem der vorhergehenden Ansprüche, **dadurch gekennzeichnet, dass** der Schritt des Änderns auf eine automatische Bestimmung des vorab gespeicherten Bereichs folgt.

7. Konfigurationsverfahren nach einem der vorhergehenden Ansprüche, **dadurch gekennzeichnet, dass** die Erstreckung der verschiedenen Bereiche von mindestens einem Datenelement definiert wird, insbesondere mindestens einem zeitlichen Datenelement wie einer Dauer, oder mindestens einem räumlichen Datenelement wie einem Zählungsdatenelement der Winkelverschiebung einer Welle des Getriebemotors.

8. Konfigurationsverfahren nach dem vorhergehenden Anspruch, **dadurch gekennzeichnet, dass** der Schritt des Änderns das Ausführen einer mathematischen Operation an dem mindestens einen Datenelement umfasst, insbesondere an mindestens einem Initialdatenelement, insbesondere eine Änderung durch Anwendung eines Multiplikationsfaktors auf das mindestens eine Datenelement, insbesondere eines Faktors, der im Intervall [0; 2.5], ja sogar im Intervall [0.5; 1.5] enthalten ist, oder eine Änderung durch Hinzufügen einer Menge zu dem mindestens einen Datenelement, insbesondere durch Hinzufügen einer Menge bezogen auf das mindestens eine Initialdatenelement.

9. Konfigurationsverfahren nach dem vorhergehenden Anspruch, **dadurch gekennzeichnet, dass** die Erstreckung des ersten Bereichs von einem ersten Datenelement definiert wird und/oder die Erstreckung des zweiten Bereichs von einem zweiten Datenelement definiert wird und/oder die Erstreckung des dritten Bereichs von einem dritten Datenelement definiert wird und/oder die Erstreckung des vierten Bereichs von einem vierten Datenelement definiert wird und/oder die Erstreckung des fünften Bereichs von einem fünften Datenelement definiert wird und/oder die Erstreckung des sechsten Bereichs von einem sechsten Datenelement definiert wird, wobei die Änderung auf identische Weise auf das erste, zweite, dritte, vierte, fünfte und sechste Datenelement angewandt wird oder die Änderung auf differenzierte Weise auf das erste, zweite, dritte, vierte, fünfte und sechste Datenelement angewandt wird.

10. Rechnerlesbares Datenspeichermedium, auf dem ein Computerprogramm gespeichert ist, das Computerprogramm-Codemittel zur Durchführung des Verfahrens nach einem der vorhergehenden Ansprüche, insbesondere zur Durchführung der Schritte eines Verfahrens nach einem der vorhergehenden Ansprüche umfasst.

11. Elektromechanischer Aktor (2) zur Betätigung eines aufrollbaren beweglichen Schließelements, **dadurch gekennzeichnet, dass** er Hardware- und/oder Software-Elemente (5, 51, 52, 53, 54) zur Durchführung des Konfigurationsverfahrens nach einem der vorhergehenden Ansprüche 1 bis 9 umfasst, insbesondere **dadurch gekennzeichnet, dass** er einen elektronisch kommutierten Gleichstrommotor umfasst.

12. Heimautomatisierungsvorrichtung (7) umfassend einen Aktor (2) nach dem vorhergehenden Anspruch und ein bewegliches Element (3).

13. Heimautomatisierungsanlage (1) umfassend einen Aktor (2) nach Anspruch 11, ein bewegliches Element (3) und ein Konfigurationswerkzeug (6).

## Claims

1. Method for configuring an actuator (2) for the operation of a moving element (3) for closure, solar protection, privacy or screening, wherein the actuator comprises a gear motor (4) and a gear motor electronic control unit (5), said electronic control unit incorporating a memory (51) in which different ranges of travel of the element have been pre-recorded, wherein the initial data recorded in the memory define the magnitudes of the different ranges used in the operation of the actuator, said method comprising a step for the relative modification of the magnitude of at least one range constituting a part of travel in relation to the initial data for the definition of said range.

2. Configuration method according to Claim 1, **characterized in that** the different ranges include:
- a first range, within which the moving element is set in motion in a first direction, notably the moving element is set in motion progressively, from a zero speed; and/or
- a second range, within which the moving element in motion in the first direction is slowed down to a zero speed; and/or
- a third range, within which a logic function for travel stop detection and/or obstacle detection while the moving element is in motion in the first direction is modified and implemented; and/or
- a fourth range, within which the moving element is set in motion in a second direction, notably the moving element is set in motion progressively, from a zero speed; and/or
- a fifth range, within which the moving element in motion in the second direction is slowed down to a zero speed; and/or
- a sixth range, within which a logic function for travel stop detection and/or obstacle detection while the moving element is in motion in the second direction is modified and implemented.

3. Configuration method according to one of the preceding claims, **characterized in that** the modification step follows a modification instruction step executed by a user or an installer or a fitter.

4. Configuration method according to the preceding claim, **characterized in that** the modification instruction step is executed by an action on a programming tool (6), specifically a portable programming tool, such as a remote control unit or a tablet computer or a telephone.

5. Configuration method according to one of the preceding claims, **characterized in that** the modification step follows, and specifically automatically follows, a step in which a characteristic of the moving element (3), for example its travel or a torque required for the drive thereof, is determined.

6. Configuration method according to one of the preceding claims, **characterized in that** the modification step follows an automatic determination of the pre-recorded range.

7. Configuration method according to one of the preceding claims, **characterized in that** the magnitude of the different ranges is defined by at least one variable, specifically at least one temporal variable, such as a duration, or at least one spatial variable, such as a counter variable for the angular displacement of a gear motor shaft.

8. Configuration method according to the preceding claim, **characterized in that** the modification step comprises the execution of a mathematical operation on at least one variable, specifically on at least one initial variable, specifically a modification by the application of a multiplication factor to the at least one variable, specifically a factor within the interval [0 ; 2.5], or within the interval [0.5 ; 1.5], or a modification by an addition of a quantity to the at least one variable, specifically by an addition of a quantity relative to the at least one initial variable.

9. Configuration method according to the preceding claim, **characterized in that** the magnitude of the first range is defined by a first variable and/or the magnitude of the second range is defined by a second variable and/or the magnitude of the third range is defined by a third variable and/or the magnitude of the fourth range is defined by a fourth variable and/or the magnitude of the fifth range is defined by a fifth variable and/or the magnitude of the sixth range is defined by a sixth variable, wherein the modification is applied in an identical manner to the first, second, third, fourth, fifth and sixth variables, or the modification is applied in a differentiated manner to the first, second, third, fourth, fifth and sixth variables.

10. Computer-readable data storage medium, on which a computer program is stored containing program code means for the implementation of the method according to one of the preceding claims, specifically for the implementation of the steps of a method according to one of the preceding claims.

11. Electro-mechanical actuator (2) for the operation of a moving rolling closure element, **characterized in that** it comprises hardware and/or software components (5, 51, 52, 53, 54) for the implementation of the configuration method according to one of claims 1 to 9, and specifically **characterized in that** it comprises an electronically-commutated DC motor.

12. Home-automation device (7) comprising an actuator (2) according to the preceding claim, and a moving element (3).

13. Home-automation installation (1) comprising an actuator (2) according to Claim 11, a moving element (3) and a configuration tool (6).
